# EUROPÄISCHE PATENTSCHRIFT

(11) **EP 3 611 100 B1**
(45) Veröffentlichungstag und Bekanntmachung des Hinweises auf die Patenterteilung: **15.07.2020**
(21) Anmeldenummer: 18188721.7
(22) Anmeldetag: 13.08.2018
(51) Int. Cl.: B65B 11/54, B65B 49/08

(54) **VERPACKUNGSMASCHINE MIT EINER WÄGEEINRICHTUNG**
PACKAGING MACHINE WITH A WEIGHING UNIT
MACHINE D'EMBALLAGE DOTÉE D'UN DISPOSITIF DE PESAGE

(43) Veröffentlichungstag der Anmeldung: 19.02.2020
(73) Patentinhaber: Bizerba SE & Co. KG, 72336 Balingen (DE)
(72) Erfinder: Elis, Eugen, 72229 Rohrdorf (DE); Kirsch, Sascha, 72393 Burladingen (DE)
(74) Vertreter: Kohler Schmid Möbus Patentanwälte

(56) Entgegenhaltungen:
- EP-A1- 0 368 496
- EP-A1- 3 048 052
- EP-B1- 3 093 244
- WO-A2-00/15499

## Beschreibung

Die Erfindung betrifft eine Verpackungsmaschine zum Verpacken von Stücken von Verpackungsgut mittels einer dehnbaren Folie. Die Verpackungsmaschine umfasst eine an einem Maschinenrahmen starr befestigte Wägeeinrichtung zur Ermittlung des jeweiligen Gewichts eines einzelnen Stücks Verpackungsgut. Die Verpackungsmaschine umfasst ferner eine ebenfalls am Maschinenrahmen befestigte Folientransportvorrichtung mit einer Riemenfördereinrichtung zum Transport der Folie zum Verpackungsgut. Weiterhin verfügt die Verpackungsmaschine über einen Faltmechanismus zum Falten der Folie, welcher zwei seitliche Schieber umfasst, die die Folie links und rechts unter das Verpackungsgut schieben, sowie einen rückwärtigen Schieber, der die Folie von hinten unter das Verpackungsgut schiebt. Aus der DE 20 2015 104 073 U1 ist eine Verpackungsmaschine mit einer Waage in einem Einbringungsmechanismus bekannt. Die Waage wägt eine Schale mit einem Artikel. Anschließend befördert der Einbringungsmechanismus die Schale zu einem Hebemechanismus. Die Verpackungsmaschine weist auch einen Folienzuführungsmechanismus und einen Folienbeförderungsmechanismus auf, mit denen eine Folie zu einer Stelle über dem Hebemechanismus transportiert und durch einen Schneidemechanismus zu einem rechteckigen Bogen geschnitten wird. Der Hebemechanismus schiebt dann die Schale mit dem Artikel nach oben gegen die Folie. Die Folie wird durch linke, rechte und hintere Faltungsplatten bzw. Schieber zur Unterseite der Schale hin gefaltet. Eine Abgabeschubvorrichtung schiebt die Schale zu einer Abgabeplattform, wobei der vordere Folienabschnitt durch einen vorderen Faltungsstab zur Unterseite der Folie hin gefaltet wird. Anschließend wird die Folie auf dem Weg zur Abgabeplattform durch eine Heizwalze versiegelt.

Eine Verpackungsmaschine mit einer Folienzuführungseinrichtung und einem Hubtisch zum Transport eines Verpackungsguts gegen eine Folie sowie einem Falt- und Versiegelungsmechanismus ist auch aus der EP 3 093 244 B1 bekannt.

Durch die rasche Bewegung der Faltungsplatten beim Falten der Folie entstehen insbesondere bei hohen Verpackungsgeschwindigkeiten Vibrationen, die sich auf den Maschinenrahmen übertragen.
Durch diese Vibrationen wird eine exakte Wägung erheblich erschwert und es können die Wägewerte der Schale und des Artikels verfälscht werden. Dabei ist berücksichtigen, dass die Packungen nach Preis/Gewicht verkauft werden und die Güte der Wägung besonderen eichtechnischen Anforderungen genügen muss.

Aufgabe der Erfindung ist es demgegenüber, eine Verpackungsmaschine der eingangs definierten Art bereitzustellen, bei der auch bei hohen Verpackungsgeschwindigkeiten der Wägewert nicht oder nur in einem vertretbaren Toleranzbereich verfälscht wird.

Diese Aufgabe wird auf technisch besonders einfache und überraschend wirkungsvolle Weise durch eine gattungsgemäße Verpackungsmaschine der oben beschriebenen Art gelöst, die sich dadurch auszeichnet, dass sowohl die seitlichen Schieber als auch der rückwärtige Schieber über mindestens ein Dämpfungselement am Maschinenrahmen befestigt sind. Das Dämpfungselement ist so gestaltet, dass es eine Übertragung von mechanischen Schwingungen der seitlichen Schieber und des rückwärtigen Schiebers auf den Maschinenrahmen verhindert oder zumindest abschwächt.

Eine Dehnfolienverpackungsmaschine mit hoher Leistung kann mehr als 35 Verpackungsgüter, insbesondere große Tray-Schalen, pro Minute verpacken. Sehr leistungsstarke Maschinen können bei kleinen Tray-Schalen auch mehr als 40, je nach Packungsgröße sogar bis zu 50 Packungen pro Minute erreichen.

Um ein Verpackungsgut zu verpacken, müssen insbesondere folgende Schritte ausgeführt werden:
- Das Verpackungsgut wird aufgenommen und gewogen.
- Die Folie wird aus dem Folienvorrat abgewickelt, abgeschnitten und mit den Riemenfördereinrichtungen gespannt.
- Das Verpackungsgut wird über einen Hubtisch angehoben und unter der Folie hochgedrückt.
- Die Folie wird mit den seitlichen Schiebern gleichzeitig links und rechts unter das Verpackungsgut geschoben. Ferner wird die Folie mit dem rückwärtigen Schieber von hinten unter das Verpackungsgut geschoben.
- Das Verpackungsgut wird etikettiert und auf das Siegelband geschoben, wobei der vordere Folienteil unter die Packung geschoben wird.
- Die Folie wird unter der Tray-Schale versiegelt und das Verpackungsgut wird ausgegeben.

Während manche der Schritte parallel gemacht werden können (z. B. während die vorherige Packung ausgegeben wird, kann die nächste Packung schon über den Hubtisch unter die Folie gedrückt werden), sind einige der Schritte nur zeitlich nacheinander ausführbar. Zum Beispiel müssen die seitlichen Schieber wieder in ihrer Ausgangsstellung sein, damit der rückwärtige Schieber die Folie von hinten unter die Packung schieben kann, um eine Kollision der seitlichen Schieber und des rückwärtigen Schiebers zu vermeiden.

Sollen 40 Packungen pro Minute oder mehr verpackt werden, so bleibt für die Vor-und-zurück Bewegung der seitlichen Schieber nicht einmal eine Sekunde Zeit. Bei einer Breite eines Verpackungsguts, zum Beispiel einer Tray-Schale, von 20cm muss jeder seitliche Schieber in dieser Zeit mehr als 10cm unter die Packung bewegt werden und die gleiche Strecke wieder zurücklegen. Der seitliche Schieber wird also mit einer hohen Geschwindigkeit und auch mit hoher Beschleunigung bewegt.

Bei einem solchen Verpackungsvorgang entsteht durch die Beschleunigung der seitlichen Schieber und des rückwärtigen Schiebers ein erheblicher Impuls, der sich auf die Verpackungsmaschine auswirkt. Außerdem entstehen Kräfte, wenn die seitlichen Schieber auf die durch Riemenfördereinrichtungen auseinander gezogene Folie treffen, um diese unter das Verpackungsgut zu schieben. In dem Moment, in dem die seitlichen Schieber die Folie unter das Verpackungsgut schieben, werden die Riemenfördereinrichtungen geöffnet, so dass die Folie "losgelassen" wird und durch die Schieber unter das Verpackungsgut mitgenommen werden kann. Dabei wirken starke Kräfte auf die Schieber. Weitere Kräfte entstehen unter anderem während der Bewegung unter das Verpackungsgut durch Reibung an den Schiebern. Somit wirken während eines Verpackungsvorgangs verschiedene, sich überlagernde, teilweise relativ hohe Kräfte auf die Schieber.

Durch die (bewegliche) Befestigung der Schieber am Maschinenrahmen entstehen dann in der Verpackungsmaschine Vibrationen, die den Vorgang des Wägens schwierig machen und das Messergebnis des Wägevorgangs verfälschen können, der aber -wie oben erwähntbesonderen eichtechnischen Anforderungen genügen muss.
Die Übertragung der Vibrationen von den Schiebern auf den Maschinenrahmen und damit auf die Waage bzw. das Wägeelement werden durch erfindungsgemäße Dämpfungselemente, über die der rückwärtige Schieber und die seitlichen Schieber am Maschinenrahmen befestigt sind, in der Praxis vorzugsweise durch sechs solcher Dämpfungselemente, verhindert oder abgeschwächt, insbesondere um zumindest 50%. Hierdurch wird ein exaktes Wägen des Verpackungsgutes präzisiert bzw. überhaupt erst sinnvoll ermöglicht.

Die Dämpfungselemente nehmen außerdem Scher- und Druckkräfte auf, die durch die Bewegung der Schieber entstehen. Dadurch wird eine vibrationsübertragende starre Verbindung zwischen Verpackungsmodul und Maschinenrahmen vermieden.

Eine vorteilhafte Ausführungsform der erfindungsgemäßen Verpackungsmaschine zeichnet sich dadurch aus, dass die beiden seitlichen Schieber eine gemeinsame, mechanisch verbundene Einheit bilden und über einen umlaufenden Antriebsriemen mittels eines gemeinsamen, vorzugsweise elektrischen, Motors in simultaner, gegensynchroner Bewegung angetrieben werden. Auf diese Weise kann die erfindungsgemäße Verpackungsmaschine im Bereich der seitlichen Schieber besonders kompakt gestaltet werden.

Unter gegensynchroner Bewegung der seitlichen Schieber soll an dieser Stelle insbesondere verstanden werden, dass sich die beiden Schieber synchron aufeinander zu bzw. voneinander weg bewegen. Hierzu ist vorzugsweise ein seitlicher Schieber an dem oberen Trum des Antriebsriemens angeordnet und ein seitlicher Schieber an dem unteren Trum des Antriebsriemens, wobei die seitlichen Schieber parallel zueinander verlaufen.

Eine weitere Ausführungsform ist dadurch gekennzeichnet, dass die beiden seitlichen Schieber und der rückwärtige Schieber zusammen in einem Verpackungsmodul angeordnet sind, und dass das Verpackungsmodul über das mindestens eine Dämpfungselement am Maschinenrahmen befestigt ist. Durch die Dämpfung des Verpackungsmoduls mit den seitlichen und dem rückwärtigen Schieber durch zumindest ein Dämpfungselement, in der Praxis insbesondere sechs Dämpfungselemente, kann gleichzeitig die Dämpfung der Vibrationen aller drei Schieber bewirkt werden.

Bei einer Klasse von weiteren vorteilhaften Ausführungsformen der Erfindung umfasst das Dämpfungselement eine erste Platte, vorzugsweise aus Metall, mit welcher das Dämpfungselement am Maschinenrahmen befestigt ist. Das Dämpfungselement umfasst ferner eine zweite Platte, vorzugsweise ebenfalls aus Metall, mit welcher das Dämpfungselement direkt oder indirekt, gegebenenfalls beweglich, mit den seitlichen Schiebern oder mit dem rückwärtigen Schieber oder mit dem Verpackungsmodul verbunden ist. Dabei berühren sich die beiden Platten nicht. Zwischen den beiden Platten ist gummi-elastisches Dämpfungsmaterial, insbesondere eine Kunststoffmasse, vorzugsweise ein PU-Schaum, angeordnet. Die Platten verleihen dem Dämpfungselement bzw. den Dämpfungselementen besonders große Stabilität und schützen das gummi-elastische Material.

Das gummi-elastische Material bewirkt die eigentliche Dämpfung. Dabei kann das gummielastische Material auch ein strukturiertes Gerippe, insbesondere eine Wabenstruktur oder wabenähnliche Struktur aufweisen. Unterschiedliche Strukturen des Materials sind für unterschiedliche Arten der angreifenden Kräfte geeignet, insbesondere der Scherkräfte. Da durch das Verpackungsmodul insbesondere Scherkräfte an dessen Befestigung am Rahmen wirken, ist ein erfindungsgemäßes Dämpfungselement besonders geeignet, diese Kräfte zu absorbieren. Das Dämpfungselement kann aber auch als ausgeschäumtes Stanzteil ausgeführt sein.

Bei besonders bevorzugten Weiterbildungen dieser Klasse von Ausführungsformen weisen die beiden Platten einen Abstand zwischen 3mm und 8mm, vorzugsweise zwischen 4mm und 6mm, auf, welcher vom Dämpfungsmaterial überbrückt wird. Bei einem solchen Abstand kann genügend Dämpfungsmaterial in den Spalt eingeführt werden, um eine ausreichende Dämpfung zu bewirken.

Eine weitere vorteilhafte Ausbildung der Folientransportvorrichtung ist dadurch gekennzeichnet, dass das gummi-elastische Dämpfungsmaterial einen Elastizitätsmodul E im Bereich 5·10⁶ N/m² ≤ E ≤ 5·10⁸ N/m², vorzugsweise 1·10⁷ N/m² ≤ E ≤ 1·10⁸ N/m², aufweist. Bei Werten des Elastizitätsmoduls in diesem Bereich wird eine ausreichende Dämpfung der Vibrationen sichergestellt.

Bei einer weiteren Klasse von Weiterbildungen der obigen Ausführungsformen sind die Platten des Dämpfungselements sowohl am Maschinenrahmen als auch direkt oder indirekt, gegebenenfalls beweglich, an den seitlichen Schiebern oder am rückwärtigen Schieber oder am Verpackungsmodul über ein reversibles Befestigungsmittel, vorzugsweise mittels Schrauben, befestigt. Schrauben oder andere Befestigungsmittel wie etwa Klammern bewirken eine stabile, reversible Verbindung der Dämpfungselemente mit dem Maschinenrahmen einerseits und den Schiebern andererseits. Dabei ist jederzeit eine zerstörungsfreie Demontage möglich, zum Beispiel zu Reparaturzwecken.

Eine bevorzugte Variante dieser Klasse von Weiterbildungen ist dadurch gekennzeichnet, dass die Befestigungsmittel, vorzugsweise Schrauben, derart ausgestaltet und positioniert sind, dass sie außer der jeweiligen Platte entweder nur noch den Maschinenrahmen oder nur noch direkt oder indirekt, gegebenenfalls beweglich, die seitlichen Schieber oder nur noch direkt oder indirekt, gegebenenfalls beweglich, den rückwärtigen Schieber oder nur noch das Verpackungsmodul berühren. Dadurch wird verhindert, dass die Schrauben selbst eine schwingungsmäßig ungedämpfte mechanische Verbindung zwischen dem Maschinenrahmen und den Schiebern bilden.

Eine weitere Ausgestaltung der Erfindung sieht vor, dass das reversible Befestigungsmittel Schrauben mit jeweils einem Schraubenkopf umfasst, und dass zwischen der Maschinenrahmen-abgewandten zweiten Platte und einem Schraubenkopf ein Ringspalt mit einer Spaltbreite zwischen 0,5mm und 1,5mm verbleibt. Durch diesen Ringspalt wird eine Übertragung der Vibrationen sicher verhindert.

Eine bevorzugte Variante dieser Ausgestaltung zeichnet sich dadurch aus, dass zumindest ein Teil der Schrauben mit ihrem Gewinde in ein entsprechendes Gegengewinde im Maschinenrahmen eingreift. Dabei sitzt die jeweilige Schraube mit ihrem Schraubenkopf im verschraubten Zustand auf der Maschinenrahmen-seitigen ersten Platte auf. Weiter ist vorgesehen, dass der Schraubenkopf in einer Bohrung durch die Maschinenrahmen-abgewandte zweite Platte sowie durch das gummi-elastische Dämpfungsmaterial versenkt ist, welche im Durchmesser zwischen 1mm und 3mm größer ist als der Durchmesser des Schraubenkopfes. Bei dieser Anordnung der Schrauben auf der ersten Platte und in der zweiten Platte sind die Dämpfungselemente auf stabile und einfache Weise mit dem Maschinenrahmen verbunden.

Bei einer anderen Weiterbildung dieser Ausgestaltung ist zumindest ein Teil der Schrauben mit ihrem Schraubenkopf in einem Abstand zum Maschinenrahmen angeordnet. Der Schraubenkopf sitzt also nicht auf dem Maschinenrahmen auf. Dabei ist der Schraubenkopf in einer ersten Bohrung durch die Maschinenrahmen-seitige erste Platte sowie durch das gummi-elastische Dämpfungsmaterial versenkt. Ferner greift das Gewinde dieser Schrauben durch eine zweite Bohrung durch die Maschinenrahmen-abgewandte zweite Platte sowie durch eine Führung des Verpackungsmoduls. Das Gewinde ist gegen die Halterung des Verpackungsmoduls mittels einer Schraubenmutter verschraubt. Diese Anordnung der Schrauben mit einem Durchgriff durch die zweite Platte und einer Fixierung durch Schraubenmuttern ermöglicht eine stabile Verbindung der Dämpfungselemente mit dem Verpackungsmodul.

Eine weitere Verbesserung dieser Weiterbildung lässt sich dadurch erreichen, dass zumindest ein Teil der Schrauben mittels eines im Maschinenrahmen befestigten Bolzens aus gummi-elastischem Dämpfungsmaterial, welcher im verschraubten Zustand in den Schraubenkopf eingreift, gegen Verdrehung gesichert sind. Die Verdrehsicherung bildet hier ein weiteres Sicherheitselement, um eine Lockerung der Schrauben sowie ein Verdrehen des Dämpfungselements um die Achse der ersten Schraube zu verhindern.

Bei einer weiteren Ausführungsform der erfindungsgemäßen Verpackungsmaschine ist ein Stoßschieber vorhanden, der das Verpackungsgut nach Abschluss der Aktionen der zwei seitlichen Schieber sowie des rückwärtigen Schiebers auf ein Heißversiegelungsband stößt. Dabei wird die Folie auch von vorn unter das Verpackungsgut geschoben. Der Stoßschieber ist entweder in das Verpackungsmodul integriert oder über mindestens ein eigenes Dämpfungselement am Maschinenrahmen befestigt. Der Stoßschieber ermöglicht einen raschen Weitertransport des Verpackungsguts zu dem Heißversiegelungsband. Ein Dämpfungselement kann eine Übertragung der bei diesem Weitertransport entstehenden Vibrationen auf den Maschinenrahmen unterdrücken oder zumindest erheblich abschwächen.

Eine bevorzugte Ausführungsform der Verpackungsmaschine ist dadurch gekennzeichnet, dass zumindest die Teile der Folientransportvorrichtung, welche die Riemenfördereinrichtung zum Transport der Folie umfassen, über mindestens ein eigenes Dämpfungselement am Maschinenrahmen befestigt sind. Auch beim Transport der Folie durch die Riemenfördereinrichtung entstehen Vibrationen, die durch ein Dämpfungselement überdrückt oder auf eine kontrollierte Größe reduziert werden können.

Schließlich zeichnet sich eine weitere Ausführungsform der Verpackungsmaschine dadurch aus, dass ein Stretchmodul zum Spannen der Folie vor ihrem Kontakt mit dem Verpackungsgut vorhanden ist, welches insbesondere über mindestens ein eigenes Dämpfungselement am Maschinenrahmen befestigt ist. Durch eine VorDehnung in einem Stretchmodul legt sich die Folie besonders glatt um das Verpackungsgut. Das Stretchmodul umfasst insbesondere die Riemenfördereinrichtungen. Die mit dem Stretchen verbundenen Vibrationen können ebenfalls durch ein Dämpfungselement am Maschinenrahmen weggedämpft werden.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden. Es zeigen:
- Fig. 1: eine isometrische Ansicht einer Verpackungsmaschine zum Verpacken von Stücken von Verpackungsgut mittels einer dehnbaren Folie;
- Fig. 2: eine isometrische Ansicht des Verpackungsmoduls der Verpackungsmaschine mit den Antriebsmotoren für die Schieber;
- Fig. 3: wie Fig. 2, jedoch ohne den zugehörigen rückwärtigen Schieber und ohne den Stoßschieber sowie deren Antriebsmotoren;
- Fig. 4: einen schematischen Querschnitt durch die Halterung des Verpackungsmoduls sowie ein am Maschinenrahmen der Verpackungsmaschine befestigtes Dämpfungselement; und
- Fig. 5: eine Detailansicht der Befestigung des Verpackungsmoduls an dem Maschinenrahmen.

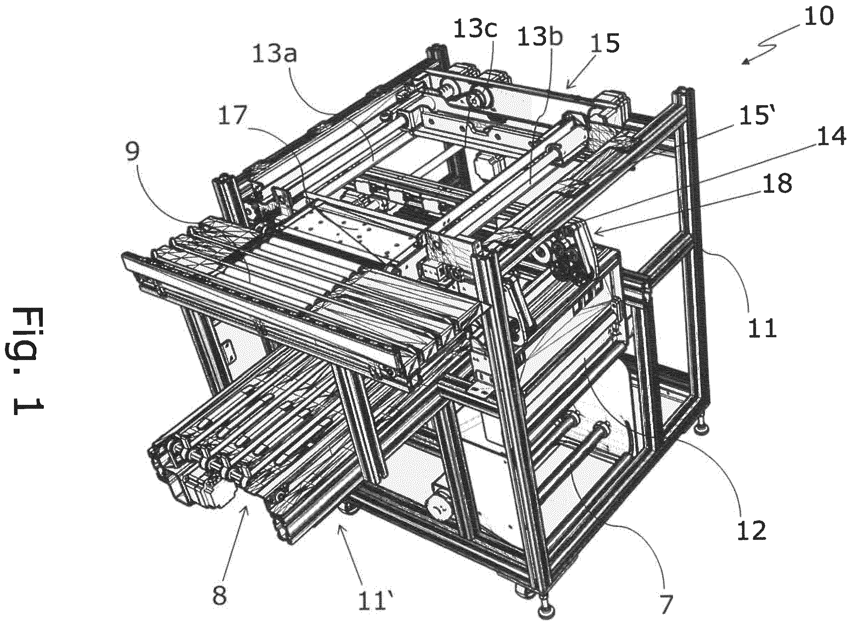

**Fig. 1** zeigt eine isometrische Ansicht einer Verpackungsmaschine **10** zum Verpacken von Stücken von Verpackungsgut mittels einer dehnbaren Folie. Die Maschine verfügt über einen Maschinenrahmen **11.** An dem Maschinenrahmen 11 ist eine Wägeeinrichtung **11'** starr befestigt. Die Wägeeinrichtung 11' dient der Ermittlung des jeweiligen Gewichts eines einzelnen Stücks Verpackungsgut. Außerdem ist an dem Maschinenrahmen eine Folientransportvorrichtung **12** zur Zuführung von Folien aus einem Folienvorrat **7** vorgesehen, die ein Streckmodul bzw. Stretchmodul **18** zum Vorspannen der Folien vor der Einführung in einen Faltmechanismus zum Falten der Folie um das Verpackungsgut aufweist. Der Faltmechanismus umfasst zwei seitliche Schieber **13a, 13b,** welche die Folie links und rechts unter das Verpackungsgut schieben. Der Faltmechanismus umfasst weiter einen rückwärtigen Schieber **13c,** der die Folie von hinten unter das Verpackungsgut schiebt.

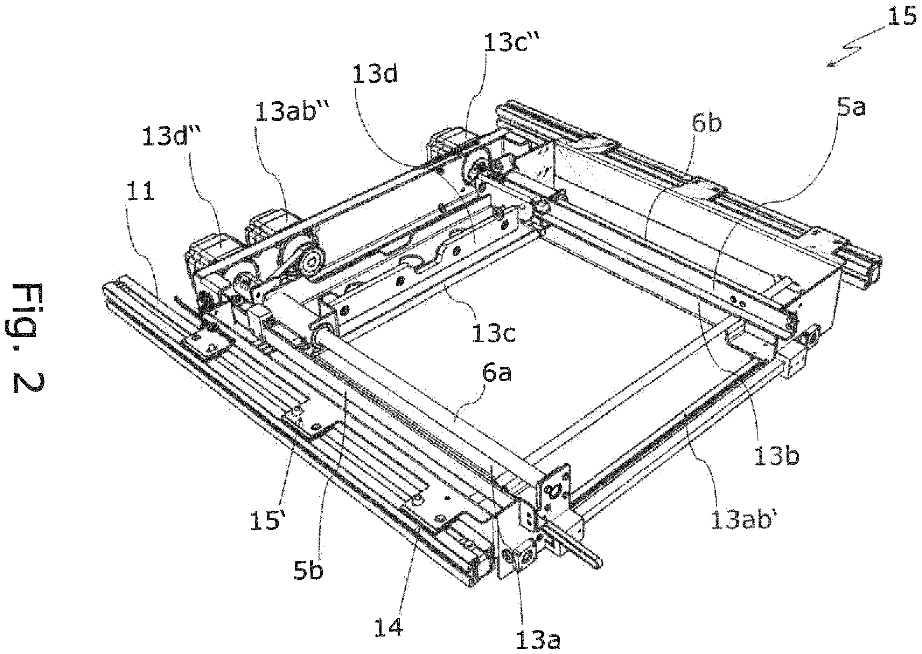

Der seitliche Schieber 13a, 13b und der rückwärtige Schieber 13c sind erfindungsgemäß kompakt in einem Verpackungsmodul **15** des Faltmechanismus angeordnet.
Erfindungsgemäß ist das Verpackungsmodul 15 über sechs Halterungen, von denen hier eine beispielhaft mit **15'** bezeichnet ist, und sechs Dämpfungselemente, von denen hier beispielhaft eines mit **14** bezeichnet ist, an dem Maschinenrahmen 11 befestigt (siehe auch Fig. 2). Die sechs Dämpfungselemente 14 sind derart gestaltet, dass sie eine Übertragung von mechanischen Schwingungen der seitlichen Schieber 13a, 13b und des rückwärtigen Schiebers 13c verhindern oder zumindest abschwächen.

Die Verpackungsmaschine 10 verfügt über ein Siegelband **17** zum Heißversiegeln der Folienverpackung um das Verpackungsgut. Außerdem weist die Verpackungsmaschine 10 einen Eingang **8** zur Einführung des Verpackungsguts in die Verpackungsmaschine 10 und ein Abführband **9** zum Abtransport des Verpackungsguts nach dem Heißversiegeln des Verpackungsguts auf.

**Fig. 2** zeigt eine isometrische Ansicht des Verpackungsmoduls 15. Die seitlichen Schieber 13a, 13b sind an einem Antriebsriemen 13ab' angeordnet. Das Verpackungsmodul 15 hat einen Stoßschieber **13d** zum Transport des Verpackungsguts auf das Heißversiegelungsband 17 (siehe Fig. 1). Der Stoßschieber 13d wird von einem Motor **13d"** angetrieben. Außerdem weist das Verpackungsmodul den rückwärtigen Schieber 13c zum Falten der Folie um das Verpackungsgut zusammen mit den seitlichen Schiebern 13a, 13b auf. Die seitlichen Schieber 13a, 13b sind als mechanisch verbundene Einheit mittels eines gemeinsamen, vorzugsweise elektrischen Motors **13ab"** in simultaner, synchroner, entgegengesetzt gerichteter Bewegung angetrieben. Der rückwärtige Schieber 13c wird von einem Motor **13c"** angetrieben. Der Stoßschieber 13d wird über eine Führung **5a** und eine Gewindestange **6a** geführt und angetrieben. Ebenso wird der rückwärtige Schieber 13c über eine Führung **5b** und eine Gewindestange **6b** geführt und angetrieben. Das Verpackungsmodul 15 ist über die Halterungen, von denen hier eine beispielhaft mit 15' bezeichnet ist, und die Dämpfungselemente, von denen hier eines beispielhaft mit 14 bezeichnet ist, an dem Maschinenrahmen 11 befestigt.

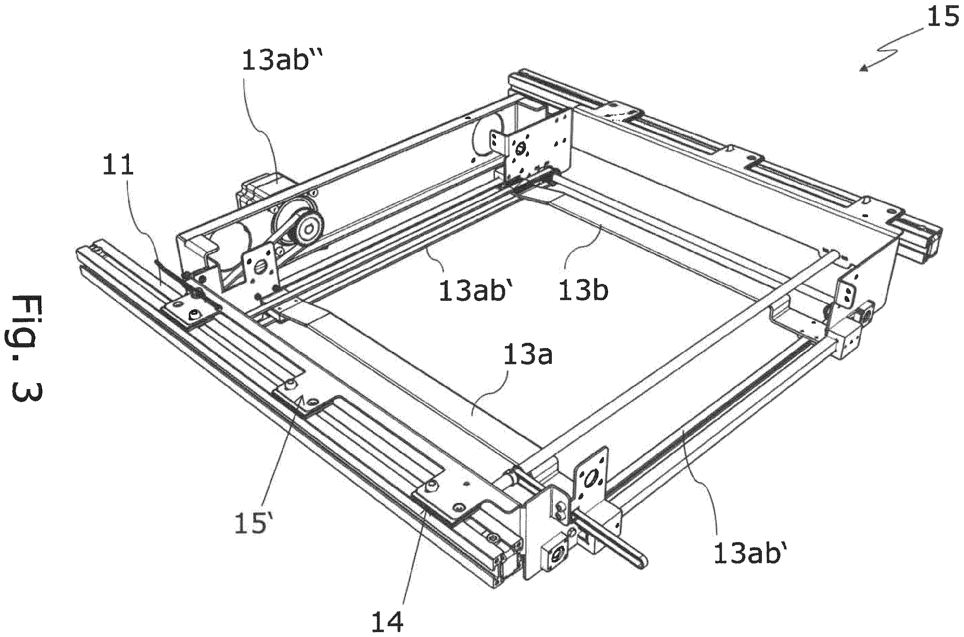

**Fig. 3** zeigt eine isometrische Ansicht des Verpackungsmoduls 15 ohne den rückwärtigen Schieber 13c und ohne den Stoßschieber 13d sowie die zugehörigen Gewindestangen und Führungen (siehe Fig. 2). Dadurch lassen sich die seitlichen Schieber 13a, 13b deutlicher darstellen. Insbesondere sind die seitlichen Schieber 13a, 13b an einem oberen und einem unteren Trum von Antriebsriemen 13ab' angeordnet. Gezeigt ist weiter der Antriebsmotor 13ab" für die seitlichen Schieber 13a, 13b. Dargestellt sind auch die Halterungen, von denen hier eine beispielhaft mit 15' bezeichnet ist, sowie die Dämpfungselemente, von denen hier eines beispielhaft mit 14 bezeichnet ist, mit denen das Verpackungsmodul 15 an dem Maschinenrahmen 11 befestigt ist.

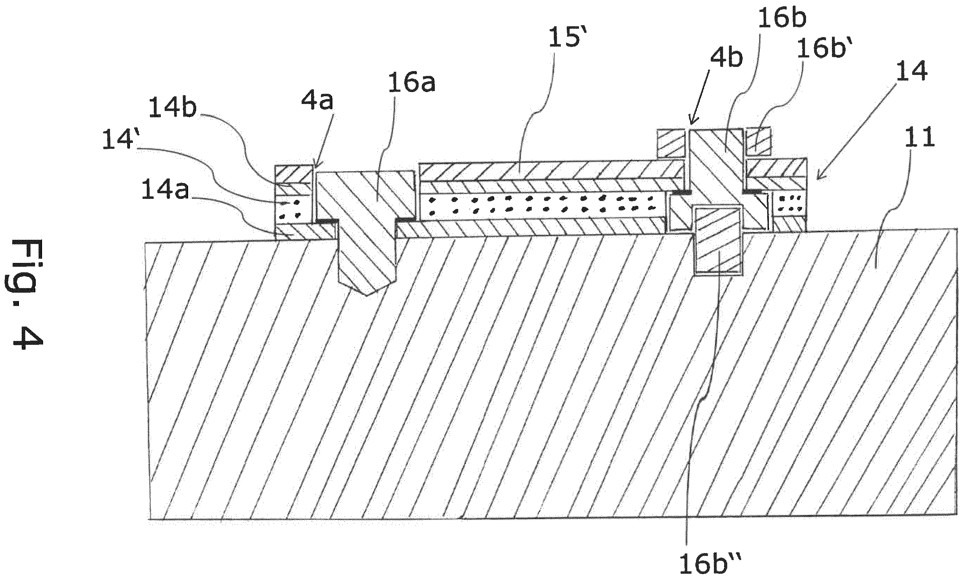

**Fig. 4** zeigt im schematischen Querschnitt ein Dämpfungselement 14, das zusammen mit der Halterung 15' des Verpackungsmoduls 15 (siehe Fig. 2) an dem Maschinenrahmen 11 befestigt ist. Das Dämpfungselement 14 umfasst eine erste Platte **14a** aus Metall, die am Maschinenrahmen 11 angeordnet ist. Das Dämpfungselement 14 weist ferner eine zweite, vom Maschinenrahmen 11 abgewandte, Platte **14b** auf. Zwischen den Platten 14a, 14b ist ein gummi-elastisches Dämpfungsmaterial **14'** angeordnet.

Eine Schraube **16a** greift in ein entsprechendes Gegengewinde (nicht gezeigt) im Maschinenrahmen 11 ein, wobei der Schraubenkopf der Schraube **16a** auf der ersten Platte 14a aufsitzt. Der Schraubenkopf der Schraube 16a ist in einer Bohrung durch die zweite Platte 14b und das gummi-elastische Dämpfungsmaterial 14' versenkt. Zwischen dem Schraubenkopf der Schraube 16a und der zweiten Platte 14b sowie dem Dämpfungsmaterial ist hierbei ein ringförmiger Spalt **4a** ausgebildet.

Eine weitere Schraube **16b** ist mit ihrem Schraubenkopf durch die erste Platte 14a sowie das gummi-elastische Dämpfungsmaterial 14' versenkt. Das Gewinde (nicht gezeigt) der weiteren Schraube 16b greift durch eine Bohrung durch die zweite Platte (14b) und durch eine Führung (nicht gezeigt) des Verpackungsmoduls 15 (s. Fig. 2). Die weitere Schraube 16b ist mittels einer Schraubenmutter **16b'** gegen die Halterung 15' des Verpackungsmoduls 15 verschraubt. Zwischen der weiteren Schraube 16b und den Platten 14a, 14b sowie dem Dämpfungsmaterial 14' befindet sich in Umfangsrichtung der weiteren Schraube 16b ein ringförmiger Spalt **4b.** Ein Bolzen **16b"** aus gummi-elastischem Material greift in den Schraubenkopf der weiteren Schraube 16b ein und sichert die weitere Schraube 16b gegen Verdrehung.

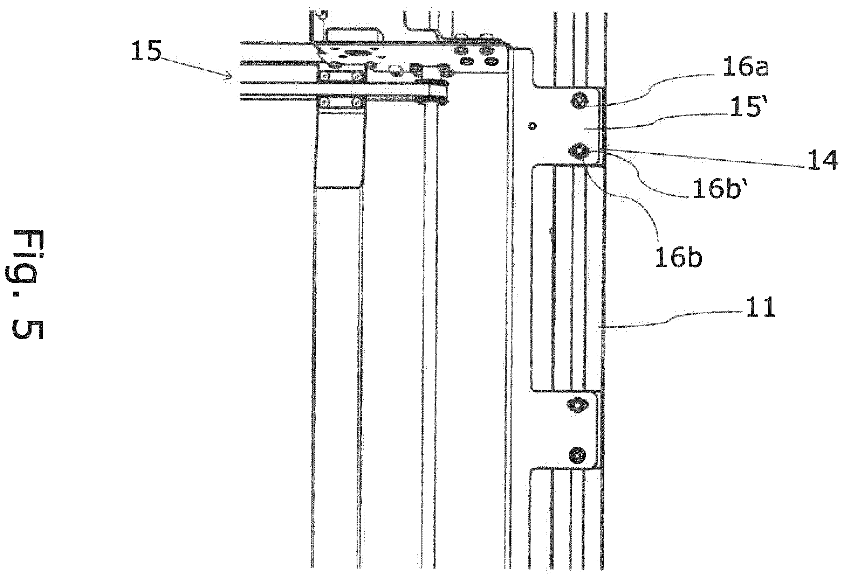

**Fig. 5** zeigt eine Detailansicht der Befestigung des Verpackungsmoduls 15 über die Dämpfungselemente 14 an dem Maschinenrahmen 11. Dargestellt ist die Schraube 16a, deren Schraubkopf in einer Bohrung durch die zweite Platte 14b versenkt ist und die in den Maschinenrahmen 11 eingreift. Gezeigt ist ferner die weitere Schraube 16b deren Schraubkopf in einer Bohrung durch die erste Platte 14a versenkt ist und die gegen die Halterung 15' des Verpackungsmoduls mittels einer Schraubenmutter 16b' verschraubt ist.

Der Bolzen 16" bildet hier ein weiteres Sicherheitselement. Damit wird einerseits eine Lockerung der Schrauben vermieden, andererseits ein Verdrehen der ersten Platte 14a um die Schraube 16a herum verhindert. Auf diese Weise kann sich die Platte 14a nicht gegenüber dem Maschinenrahmen 11 bewegen und somit wird auch eine Verdrehung des Dämpfungselements gegenüber dem Maschinenrahmen 11 sicher verhindert.

### Bezugszeichenliste

- 4a,b: Spalte
- 5a,b: Führungen
- 6a,b: Gewindestangen
- 7: Folienvorrat
- 8: Eingang
- 9: Abführband
- 10: Verpackungsmaschine
- 11: Maschinenrahmen
- 11': Waage/Wägeeinrichtung
- 12: Folientransportvorrichtung
- 13a,b: seitliche Schieber
- 13c: rückwärtiger Schieber
- 13d: Stoßschieber
- 13ab': Antriebsriemen
- 13ab": Motor
- 14: Dämpfungselement
- 14a,b: Platten
- 14': Dämpfungsmaterial
- 15: Verpackungsmodul
- 15': Halterung
- 16a,b: Schrauben
- 17: Siegelband
- 18: Stretchmodul

## Patentansprüche

1. Verpackungsmaschine (10) zum Verpacken von Stücken von Verpackungsgut mittels einer dehnbaren Folie, mit einer an einem Maschinenrahmen (11) starr befestigten Wägeeinrichtung (11') zur Ermittlung des jeweiligen Gewichts eines einzelnen Stücks Verpackungsgut, mit einer ebenfalls am Maschinenrahmen (11) befestigten Folientransportvorrichtung (12) mit einer Riemenfördereinrichtung zum Transport der Folie zum Verpackungsgut, sowie mit einem Faltmechanismus zum Falten der Folie, welcher zwei seitliche Schieber (13a, 13b) umfasst, die die Folie links und rechts unter das Verpackungsgut schieben, sowie einen rückwärtigen Schieber (13c), der die Folie von hinten unter das Verpackungsgut schiebt,
**dadurch gekennzeichnet,**
**dass** sowohl die seitlichen Schieber (13a, 13b) als auch der rückwärtige Schieber (13c) über mindestens ein Dämpfungselement (14) am Maschinenrahmen (11) befestigt sind, welches so gestaltet ist, dass es eine Übertragung von mechanischen Schwingungen der seitlichen Schieber (13a, 13b) und des rückwärtigen Schiebers (13c) auf den Maschinenrahmen (11) verhindert oder zumindest abschwächt.

2. Verpackungsmaschine nach Anspruch 1, **dadurch gekennzeichnet, dass** die beiden seitlichen Schieber (13a, 13b) eine gemeinsame, mechanisch verbundene Einheit bilden und über einen umlaufenden Antriebsriemen (13ab') mittels eines gemeinsamen, vorzugsweise elektrischen, Motors (13ab") in simultaner, gegensynchroner Bewegung angetrieben werden.

3. Verpackungsmaschine nach Anspruch 1 oder 2, **dadurch gekennzeichnet, dass** die beiden seitlichen Schieber (13a, 13b) und der rückwärtige Schieber (13c) zusammen in einem Verpackungsmodul (15) angeordnet sind, und dass das Verpackungsmodul (15) über das mindestens eine Dämpfungselement (14) am Maschinenrahmen (11) befestigt ist.

4. Verpackungsmaschine nach Anspruch 3, **dadurch gekennzeichnet, dass** das Dämpfungselement (14) eine erste Platte (14a), vorzugsweise aus Metall, umfasst, mit welcher das Dämpfungselement (14) am Maschinenrahmen (11) befestigt ist, sowie eine zweite Platte (14b), vorzugsweise ebenfalls aus Metall, mit welcher das Dämpfungselement (14) direkt oder indirekt, gegebenenfalls beweglich mit den seitlichen Schiebern (13a, 13b) oder mit dem rückwärtigen Schieber (13c) oder mit dem Verpackungsmodul (15) verbunden ist, wobei sich die beiden Platten (14a, 14b) nicht berühren, und dass zwischen den beiden Platten (14a, 14b) gummi-elastisches Dämpfungsmaterial (14'), insbesondere eine Kunststoffmasse, vorzugsweise ein PU-Schaum, angeordnet ist.

5. Verpackungsmaschine nach Anspruch 4, **dadurch gekennzeichnet, dass** die beiden Platten (14a, 14b) einen Abstand zwischen 3mm und 8mm, vorzugsweise zwischen 4mm und 6mm, aufweisen, welcher vom Dämpfungsmaterial (14') überbrückt wird.

6. Verpackungsmaschine nach Anspruch 4 oder 5, **dadurch gekennzeichnet, dass** das gummi-elastische Dämpfungsmaterial (14') einen Elastizitätsmodul E im Bereich 5·10⁶ N/m² ≤ E ≤ 5·10⁸ N/m², vorzugsweise 1·10⁷ N/m² ≤ E ≤ 1·10⁸ N/m², aufweist.

7. Verpackungsmaschine nach einem der Ansprüche 4 bis 6, **dadurch gekennzeichnet, dass** die Platten (14a, 14b) des Dämpfungselements (14) sowohl am Maschinenrahmen (11) als auch direkt oder indirekt, gegebenenfalls beweglich an den seitlichen Schiebern (13a, 13b) oder am rückwärtigen Schieber (13c) oder am Verpackungsmodul (15) über ein reversibles Befestigungsmittel, vorzugsweise mittels Schrauben (16a; 16b), befestigt sind.

8. Verpackungsmaschine nach Anspruch 7, **dadurch gekennzeichnet, dass** die Befestigungsmittel, vorzugsweise Schrauben (16a; 16b), derart ausgestaltet und positioniert sind, dass sie außer der jeweiligen Platte (14a, 14b) entweder nur noch den Maschinenrahmen (11) oder nur noch direkt oder indirekt, gegebenenfalls beweglich die seitlichen Schieber (13a, 13b) oder nur noch direkt oder indirekt, gegebenenfalls beweglich den rückwärtigen Schieber (13c) oder nur noch das Verpackungsmodul (15) berühren.

9. Verpackungsmaschine nach einem der Ansprüche 7 oder 8, **dadurch gekennzeichnet, dass** das reversible Befestigungsmittel Schrauben (16a; 16b) mit jeweils einem Schraubenkopf umfasst, und dass zwischen der Maschinenrahmen-abgewandten zweiten Platte (14b) und einem Schraubenkopf ein Ringspalt mit einer Spaltbreite zwischen 0,5mm und 1,5mm verbleibt.

10. Verpackungsmaschine nach Anspruch 9, **dadurch gekennzeichnet, dass** zumindest ein Teil der Schrauben (16a) mit ihrem Gewinde in ein entsprechendes Gegengewinde im Maschinenrahmen (11) eingreift, wobei die jeweilige Schraube (16a) mit ihrem Schraubenkopf im verschraubten Zustand auf der Maschinenrahmen-seitigen ersten Platte (14a) aufsitzt, und dass der Schraubenkopf in einer Bohrung durch die Maschinenrahmen-abgewandte zweite Platte (14b) sowie durch das gummi-elastische Dämpfungsmaterial (14') versenkt ist, welche im Durchmesser zwischen 1mm und 3mm größer ist als der Durchmesser des Schraubenkopfes.

11. Verpackungsmaschine nach Anspruch 9 oder 10, **dadurch gekennzeichnet, dass** zumindest ein Teil der Schrauben (16b) mit ihrem Schraubenkopf in einem Abstand zum Maschinenrahmen (11) angeordnet ist, wobei der Schraubenkopf in einer ersten Bohrung durch die Maschinenrahmen-seitige erste Platte (14a) sowie durch sowie durch das gummi-elastische Dämpfungsmaterial (14') versenkt ist, und wobei das Gewinde dieser Schrauben (16b) durch eine zweite Bohrung durch die Maschinenrahmen-abgewandte zweite Platte (14b) sowie durch eine Führung des Verpackungsmoduls (15) greift und gegen die Halterung (15') des Verpackungsmoduls (15) mittels einer Schraubenmutter (16b') verschraubt ist.

12. Verpackungsmaschine nach Anspruch 11, **dadurch gekennzeichnet, dass** zumindest ein Teil der Schrauben (16b) mittels eines im Maschinenrahmen (11) befestigten Bolzens (16b") aus gummi-elastischem Dämpfungsmaterial, welcher im verschraubten Zustand in den Schraubenkopf eingreift, gegen Verdrehung gesichert sind.

13. Verpackungsmaschine nach einem der Ansprüche 3-12, **dadurch gekennzeichnet, dass** ein Stoßschieber (13d) vorhanden ist, der das Verpackungsgut nach Abschluss der Aktionen der zwei seitlichen Schieber (13a, 13b) sowie des rückwärtigen Schiebers (13c) auf ein Heißversiegelungsband (17) stößt, wobei die Folie auch von vorn unter das Verpackungsgut geschoben wird, und dass der Stoßschieber (13d) entweder in das Verpackungsmodul (15) integriert oder über mindestens ein eigenes Dämpfungselement am Maschinenrahmen (11) befestigt ist.

14. Verpackungsmaschine nach einem der vorhergehenden Ansprüche, **dadurch gekennzeichnet, dass** zumindest die Teile der Folientransportvorrichtung (12), welche die Riemenfördereinrichtung zum Transport der Folie umfassen, über mindestens ein eigenes Dämpfungselement am Maschinenrahmen (11) befestigt sind.

15. Verpackungsmaschine nach einem der vorhergehenden Ansprüche, **dadurch gekennzeichnet, dass** ein Stretchmodul (18) zum Spannen der Folie vor ihrem Kontakt mit dem Verpackungsgut vorhanden ist, welches insbesondere über mindestens ein eigenes Dämpfungselement am Maschinenrahmen (11) befestigt ist.

## Claims

1. Packaging machine (10) for packaging pieces of material to be packaged by means of a stretchable film, the machine comprising a weighing device (11') rigidly fastened to a machine frame (11) for determining the weight of an individual piece of material to be packaged, comprising a film transport device (12), also fastened to the machine frame (11), which has a belt conveyor for transporting the film to the material to be packaged, and comprising a folding mechanism for folding the film, which folding mechanism comprises two side slides (13a, 13b) which push the film under the material to be packaged from the left and the right and a rear slide (13c), which pushes the film under the material to be packaged from behind, **characterized in that** both the side slides (13a, 13b) and the rear slide (13c) are fastened to the machine frame (11) via at least one damping element (14), which is designed so as to prevent or at least weaken a transmission of mechanical vibrations of the side slides (13a, 13b) and the rear slide (13c) to the machine frame (11).

2. Packaging machine according to claim 1, **characterized in that** the two side slides (13a, 13b) form a common, mechanically connected unit and are driven in simultaneous, synchronous movement via a rotating drive belt (13ab') by means of a common, preferably electrical, motor (13ab").

3. Packaging machine according to either claim 1 or claim 2, **characterized in that** the two side slides (13a, 13b) and the rear slide (13c) are arranged together in a packaging module (15), and **in that** the packaging module (15) is fastened to the machine frame (11) via the at least one damping element (14).

4. Packaging machine according to claim 3, **characterized in that** the damping element (14) comprises a first plate (14a), preferably made of metal, by means of which the damping element (14) is fastened to the machine frame (11), and a second plate (14b), preferably also made of metal, by means of which the damping element (14) is connected directly or indirectly, optionally movably, to the side slides (13a, 13b) or to the rear slide (13c) or to the packaging module (15), the two plates (14a, 14b) not touching one another, and **in that** rubber-elastic damping material (14'), in particular a plastics mass, preferably a PU foam, is arranged between the two plates (14a, 14b).

5. Packaging machine according to claim 4, **characterized in that** the two plates (14a, 14b) have a spacing between 3 mm and 8 mm, preferably between 4 mm and 6 mm, which is bridged by the damping material (14').

6. Packaging machine according to either claim 4 or claim 5, **characterized in that** the rubber-elastic damping material (14') has an elastic modulus E in the range 5·10⁶ N/m² ≤ E ≤ 5·10⁸ N/m², preferably 1·10⁷ N/m² ≤ E ≤ 1·10⁸ N/m².

7. Packaging machine according to any of claims 4 to 6, **characterized in that** the plates (14a, 14b) of the damping element (14) are fastened both to the machine frame (11) and directly or indirectly, optionally movably, to the side slides (13a, 13b) or to the rear slide (13c) or to the packaging module (15) by means of a reversible fastening means, preferably by means of screws (16a; 16b).

8. Packaging machine according to claim 7, **characterized in that** the fastening means, preferably screws (16a; 16b), are designed and positioned such that, with the exception of the respective plates (14a, 14b), they touch only the machine frame (11) or only the side slides (13a, 13b), directly or indirectly, optionally movably, or only the rear slide (13c), directly or indirectly, optionally movably, or only the packaging module (15).

9. Packaging machine according to either claim 7 or claim 8, **characterized in that** the reversible fastening means comprises screws (16a; 16b) each having a screw head, and **in that** an annular gap with a gap width between 0.5 mm and 1.5 mm remains between the second plate (14b) facing the machine frame and a screw head.

10. Packaging machine according to claim 9, **characterized in that** at least some of the screws (16a) engage, by means of their thread, in a corresponding mating thread in the machine frame (11), each screw (16a) being seated with its screw head on the first plate (14a) on the machine frame side in the screwed state, and **in that** the screw head is countersunk in a hole through the second plate (14b) facing away from the machine frame and through the rubber-elastic damping material (14'), which hole is between 1 mm and 3 mm larger in diameter than the diameter of the screw head.

11. Packaging machine according to either claim 9 or claim 10, **characterized in that** at least some of the screws (16b) are arranged with their screw heads at a distance from the machine frame (11), the screw head being countersunk in a first hole through the first plate (14a) on the machine frame side and through the rubber-elastic damping material (14'), and the thread of these screws (16b) engaging through a second hole through the second plate (14b) facing away from the machine frame and through a guide of the packaging module (15) and being screwed against the holder (15') of the packaging module (15) by means of a nut (16b').

12. Packaging machine according to claim 11, **characterized in that** at least some of the screws (16b) are secured against rotation by means of a bolt (16b") which is fastened in the machine frame (11), is made of rubber-elastic damping material, and engages in the screw head in the screwed state.

13. Packaging machine according to any of claims 3-12, **characterized in that** a push slide (13d) is present which, after the actions of the two side slides (13a, 13b) and the rear slide (13c), pushes the material to be packaged onto a heat-sealing strip (17), the film also being pushed under the material to be packaged from the front, and **in that** the push slide (13d) is either integrated into the packaging module (15) or fastened to the machine frame (11) via at least one separate damping element.

14. Packaging machine according to any of the preceding claims, **characterized in that** at least the parts of the film transport device (12) which comprise the belt conveyor for transporting the film are fastened to the machine frame (11) via at least one separate damping element.

15. Packaging machine according to any of the preceding claims, **characterized in that** a stretch module (18) is present for tensioning the film before it comes into contact with the material to be packaged, which stretch module is fastened to the machine frame (11) in particular via at least one separate damping element.

## Revendications

1. Machine d'emballage (10) destinée à emballer des pièces de produit à emballer au moyen d'un film étirable, comportant un moyen de pesage (11') fixé rigidement sur un bâti de machine (11) permettant de déterminer le poids respectif d'une pièce individuelle de produit à emballer, comportant un dispositif de transport de film (12) également fixé sur le bâti de machine (11), lequel dispositif de transport de film est doté d'un convoyeur à bande pour le transport du film vers le produit à emballer, et comportant un mécanisme de pliage permettant de plier le film, lequel mécanisme de pliage comprend deux coulisseaux latéraux (13a, 13b) qui poussent le film à gauche et à droite sous le produit à emballer ainsi qu'un coulisseau arrière (13c) qui pousse le film par l'arrière sous le produit à emballer, **caractérisée en ce que** les deux coulisseaux latéraux (13a, 13b) ainsi que le coulisseau arrière (13c) sont fixés sur le bâti de machine (11) par l'intermédiaire d'au moins un élément d'amortissement (14) qui est conçu de telle manière qu'il empêche ou du moins atténue la transmission de vibrations mécaniques des coulisseaux latéraux (13a, 13b) et du coulisseau arrière (13c) au bâti de machine (11).

2. Machine d'emballage selon la revendication 1, **caractérisée en ce que** les deux coulisseaux latéraux (13a, 13b) forment une unité commune, reliée de manière mécanique et sont entraînés par une courroie d'entraînement (13ab') tournante au moyen d'un moteur commun (13ab"), de préférence électrique, dans un mouvement simultané et contre-synchrone.

3. Machine d'emballage selon la revendication 1 ou 2, **caractérisée en ce que** les deux coulisseaux latéraux (13a, 13b) et le coulisseau arrière (13c) sont disposés conjointement dans un module d'emballage (15), et **en ce que** le module d'emballage (15) est fixé sur le bâti de machine (11) par l'intermédiaire de l'au moins un élément d'amortissement (14).

4. Machine d'emballage selon la revendication 3, **caractérisée en ce que** l'élément d'amortissement (14) comprend une première plaque (14a), de préférence en métal, permettant de fixer l'élément d'amortissement (14) sur le bâti de machine (11), et une seconde plaque (14b), de préférence également en métal, permettant de relier l'élément d'amortissement (14) directement ou indirectement, le cas échéant de manière mobile, aux coulisseaux latéraux (13a, 13b) ou au coulisseau arrière (13c) ou au module d'emballage (15), les deux plaques (14a, 14b) ne se touchant pas, et **en ce qu'**un matériau d'amortissement (14') élastique en caoutchouc, en particulier une masse de matière plastique, de préférence une mousse de PU, est disposé entre les deux plaques (14a, 14b).

5. Machine d'emballage selon la revendication 4, **caractérisée en ce que** les deux plaques (14a, 14b) présentant un espacement compris entre 3 et 8 mm, de préférence entre 4 et 6 mm, lequel espacement est ponté par le matériau d'amortissement (14').

6. Machine d'emballage selon la revendication 4 ou 5, **caractérisée en ce que** le matériau d'amortissement élastique en caoutchouc (14') présente un module d'élasticité E dans la plage de 5·10⁶N/m² ≤ E ≤ 5·10⁸ N/m², de préférence de 1·10⁷N/m² ≤ E ≤ 1·10⁸ N/m².

7. Machine d'emballage selon l'une des revendications 4 à 6, **caractérisée en ce que** les plaques (14a, 14b) de l'élément d'amortissement (14) sont fixées aussi bien sur le bâti (11) de la machine que directement ou indirectement, éventuellement de manière mobile, sur les coulisseaux latéraux (13a, 13b) ou sur le coulisseau arrière (13c) ou sur le module d'emballage (15) par l'intermédiaire d'un moyen de fixation réversible, de préférence au moyen de vis (16a ; 16b).

8. Machine d'emballage selon la revendication 7, **caractérisée en ce que** les moyens de fixation, de préférence des vis (16a ; 16b), sont conçus et positionnés de telle manière qu'ils touchent, en dehors de la plaque (14a, 14b) respective, soit uniquement le bâti de machine (11), soit directement ou indirectement, éventuellement de manière mobile, les coulisseaux latéraux (13a, 13b), soit uniquement directement ou indirectement, éventuellement de manière mobile, le coulisseau arrière (13c) soit uniquement le module d'emballage (15).

9. Machine d'emballage selon l'une des revendications 7 ou 8, **caractérisée en ce que** le moyen de fixation réversible comprend des vis (16a ; 16b) comportant chacune une tête de vis, et **en ce qu'**il reste une fente annulaire d'une largeur comprise entre 0,5 et 1,5 mm entre la seconde plaque (14b) opposée au bâti de machine et une tête de vis.

10. Machine d'emballage selon la revendication 9, **caractérisée en ce qu'**au moins certaines vis (16a) viennent en prise avec leur filetage dans un contre-filetage correspondant dans le bâti de machine (11), la vis (16a) respective reposant conjointement avec sa tête de vis à l'état vissé sur la première plaque (14a) du côté du bâti de machine, et **en ce que** la tête de vis est enfoncée dans un alésage à travers la seconde plaque (14b) opposée au bâti de machine et à travers le matériau d'amortissement (14') élastique en caoutchouc, alésage dont le diamètre est supérieur de 1 à 3 mm au diamètre de la tête de vis.

11. Machine d'emballage selon la revendication 9 ou 10, **caractérisée en ce qu'**au moins certaines vis (16b) sont disposées conjointement avec leur tête de vis à distance du bâti de machine (11), la tête de vis étant enfoncée dans un premier alésage à travers la première plaque (14a) du côté du bâti de machine et à travers le matériau d'amortissement (14') élastique en caoutchouc, et le filetage desdites vis (16b) venant en prise à travers un second alésage, à travers la seconde plaque (14b) opposée au bâti de machine et à travers un guide du module d'emballage (15) et est vissé contre le support (15') du module d'emballage (15) au moyen d'un écrou à visser (16b').

12. Machine d'emballage selon la revendication 11, **caractérisée en ce qu'**au moins certaines vis (16b) sont immobilisées en rotation au moyen d'un boulon (16b") fixé dans le bâti de machine (11), lequel boulon est en matériau d'amortissement élastique en caoutchouc et vient en prise dans la tête de vis à l'état vissé.

13. Machine d'emballage selon l'une des revendications 3 à 12, **caractérisée en ce qu'**un coulisseau de poussée (13d) est prévu, lequel coulisseau de poussée pousse le produit d'emballage sur un ruban thermoscellé (17) une fois les actions des deux coulisseaux latéraux (13a, 13b) et du coulisseau arrière (13c) terminées, le film étant également poussé sous le produit d'emballage par l'avant, et **en ce que** le coulisseau de poussée (13d) est soit intégré dans le module d'emballage (15) soit fixé au bâti de machine (11) par l'intermédiaire d'au moins un élément d'amortissement spécifique.

14. Machine d'emballage selon l'une des revendications précédentes, **caractérisée en ce qu'**au moins les parties du dispositif de transport de film (12) qui comprennent le convoyeur à bande pour le transport du film sont fixées sur le bâti de machine (11) par l'intermédiaire d'au moins un élément d'amortissement spécifique.

15. Machine d'emballage selon l'une des revendications précédentes, **caractérisée en ce qu'**un module d'étirage (18) est prévu pour étirer le film avant qu'il n'entre en contact avec le produit d'emballage, lequel module d'étirage est fixé au bâti de machine (11), en particulier par l'intermédiaire d'au moins un élément d'amortissement spécifique.
